# EUROPEAN PATENT SPECIFICATION

(11) **EP 4 253 481 B1**
(45) Date of publication and mention of the grant of the patent: **30.04.2025**
(21) Application number: 21897685.0
(22) Date of filing: 08.11.2021
(51) Int. Cl.: C08L 81/04

(54) **POLYPHENYLENE SULFIDE RESIN COMPOSITION AND MOLDED ARTICLE**
POLYPHENYLENSULFIDHARZZUSAMMENSETZUNG UND FORMARTIKEL DARAUS
COMPOSITION DE RÉSINE DE SULFURE DE POLYPHÉNYLÈNE ET ARTICLE MOULÉ

(30) Priority: 26.11.2020 JP 2020195848
(43) Date of publication of application: 04.10.2023
(73) Proprietor: Toray Industries, Inc., Tokyo 103-8666 (JP)
(72) Inventor: YUMIYAMA, Shohei, Nagoya-shi, Aichi 455-8502 (JP); TOKUZUMI, Keita, Nagoya-shi, Aichi 455-8502 (JP); OKUBO, Kazuya, Nagoya-shi, Aichi 455-8502 (JP)
(74) Representative: Mewburn Ellis LLP
(86) International application number: PCT/JP2021/040934
(87) International publication number: WO 2022/113710

(56) References cited:
- WO-A1-2013/001760
- WO-A1-2018/003700
- WO-A1-2021/106974
- JP-A- 2006 104 222
- JP-A- 2007 276 457
- JP-A- 2008 213 457
- JP-A- 2016 535 147
- JP-A- 2018 141 074
- JP-A- 2019 147 943
- JP-A- H10 230 556
- JP-A- H10 298 430

## Description

### Technical Field

The present invention relates to a polyphenylene sulfide resin composition having excellent tracking resistance and toughness without significantly impairing the excellent mechanical strength intrinsically possessed by a polyphenylene sulfide resin, and is usefully applied to applications such as electric and electronic components or automobile electrical components, and also applied to a wide variety of fields.

### Background Art

A polyphenylene sulfide resin (hereinafter abbreviated as a PPS resin in some cases) is an engineering plastic having excellent heat resistance, flame resistance, chemical resistance, electrical insulation, moist heat resistance, mechanical strength, and dimensional stability. A PPS resin can be molded into various molded products, fibers, and films by various molding methods including injection molding and extrusion molding, and is practically used in a wide range of fields, such as electric and electronic components, mechanical components, and automobile components.

A PPS resin, however, has a drawback, such as poor resistance to tracking breakdown occurring under a high voltage applied to the surface of an insulator, compared with other engineering plastics such as polyamide resins and polyester resins.

Accordingly, irrespective of the above-mentioned good heat resistance, flame resistance, chemical resistance, electrical insulation, moist heat resistance, mechanical strength, and dimensional stability of the PPS resin, the actual situation is that the use of a PPS resin is limited in an environment exposed to a relatively high voltage. Thus, a PPS resin composition has been desired to have an enhanced tracking resistance.

The tracking breakdown refers to a phenomenon in which, when a voltage is applied to a damaged surface of an insulator, a conducting carbonized path is formed to have a flow of short circuit current therethrough. Formation of a conducting carbonized path under application of a high voltage in particular is triggered by partial decomposition of the surface, and leads to abrupt formation of an electrically conducting path, thus making it difficult to control the properties stably.

Hitherto, some attempts to improve the tracking resistance of a PPS resin have been studied. There is a known method in which the blending amount of a PPS resin is decreased, and an inorganic filler, such as magnesium hydroxide, or another polymer, and an additive are added.

For example, Patent Literature 1 discloses that magnesium hydroxide and a polyamide resin are added to a PPS resin to enhance the tracking resistance. Patent Literature 2 discloses a composition produced by adding, to a PPS resin, magnesium hydroxide, a polyamide resin, a polyolefin polymer, and/or one or more kinds of compounds selected from a polyolefin polymer, silicone, and a fluororesin. In addition, Patent Literature 3 discloses a composition produced by adding, to a PPS resin, magnesium hydroxide, a polyamide resin, and a block copolymer based on a vinyl aromatic compound.

In addition, Patent Literature 4 and Patent Literature 5 disclose that a polyamide resin and an epoxy group-containing compound are added to a PPS resin to enhance the toughness and the processability of a resin composition.

### Citation List

### Patent Literature

Patent Literature 1: JP H05-271542 A
Patent Literature 2: JP H08-291253 A
Patent Literature 3: JP 2019-147943 A
Patent Literature 4: JP H04-222864 A
Patent Literature 5: JP 2006-104222 A

### Summary of Invention

### Technical Problem

However, Patent Literature 1 and Patent Literature 2 disclose the tracking resistance and mechanical strength of a PPS resin composition, but has no specific description of the toughness. Patent Literature 3 describes the toughness, but the effect thereof is not sufficiently satisfactory. In addition, a PPS resin composition in each of Patent Literature 4 and Patent Literature 5 has failed to obtain sufficient toughness.

In view of this, an object of the present invention is to obtain a PPS resin composition having excellent tracking resistance and toughness, without significantly damaging the various properties intrinsically possessed by a PPS resin, such as excellent mechanical properties.

### Solution to Problem

To solve the above-mentioned problems, a polyphenylene sulfide resin composition according to the present invention has the following constituents. That is, a polyphenylene sulfide resin composition, including 100 parts by weight of (A) a polyphenylene sulfide resin, 16 to 50 parts by weights of (B) a thermoplastic resin having a tracking resistance of 125 V or more based on the IEC60112 standard, and having a glass-transition temperature of 0°C or more, 10 to 25 parts by weight of (C) an epoxy group-containing olefinic copolymer, 10 to 25 parts by weight of (D) an olefinic copolymer having no polar functional group, and furthermore 40 to 140 parts by weight of (E) a fibrous filler, wherein (B) the thermoplastic resin, (C) the epoxy group-containing olefinic copolymer, and (D) the olefinic copolymer having no polar functional group are dispersed, having a number average dispersed particle size of 500 nm or less. In claim 1, (B) the thermoplastic resin is (B) a polyamide resin, and (B) the polyamide resin has a repeating unit represented by the following structural formula: 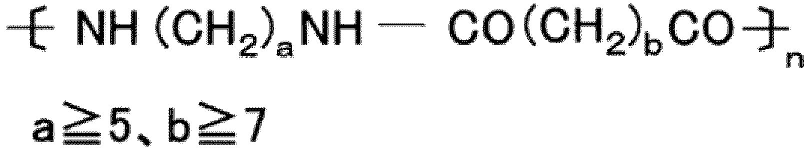 wherein a is a natural number of 5 or more, and represents the number of repeating units that are methylene groups, and b is a natural number of 7 or more, and represents the number of repeating units that are methylene groups, or (B) the polyamide resin is one or more selected from nylon 6, nylon 66, nylon 46, nylon 610, nylon 612, nylon 11, nylon 12, and aromatic nylon

A molded product according to the present invention has the following constituents. That is, a molded product composed of the polyphenylene sulfide resin composition.

In a polyphenylene sulfide resin composition according to the present invention, the ratio (C)/(D) of the blending amount of (C) the epoxy group-containing olefinic copolymer to the blending amount of (D) the olefinic copolymer having no polar functional group is preferably in the range of from 0.6 to 2.

In a polyphenylene sulfide resin composition according to the present invention, (B) the polyamide resin is preferably one or more selected from polyamide 610 wherein a is 6 and b is 8, and polyamide 612 wherein a is 6 and b is 10.

In a polyphenylene sulfide resin composition according to the present invention, the ratio (B)/((C) + (D)) of the blending amount of (B) the polyamide resin to the total blending amount of (C) the epoxy group-containing olefinic copolymer and (D) the olefinic copolymer having no polar functional group, with respect to 100 parts by weight of (A) the polyphenylene sulfide resin, is preferably 1.1 to 2.

In a molded product according to the present invention, the molded product is preferably a composite with a metal.

### Advantageous Effects of Inventions

The present invention can provide: a polyphenylene sulfide resin composition having tracking resistance and toughness that are enhanced in a balanced manner without significantly impairing the excellent mechanical strength intrinsically possessed by a polyphenylene sulfide resin; and a molded product of the composition.

### Description of Embodiments

Below, embodiments of the present invention will be described in detail.

(A) the PPS resin used in the invention is a polymer having a repeating unit represented by the following structural formula (I).

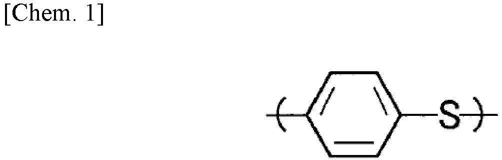

From the viewpoint of heat resistance, the resin is preferably a polymer containing 70 mol% or more, more preferably 90 mol% or more, of the polymer containing a repeating unit represented by the above-mentioned structural formula. In addition, approximately less than 30 mol% of the repeating unit of the PPS resin may be composed of, for example, a repeating unit having the below-mentioned structure.

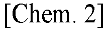

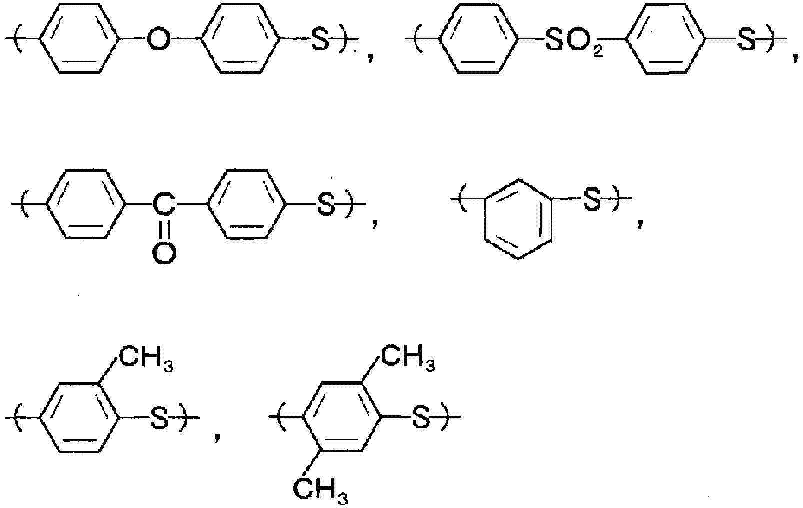

Below, a method or producing (A) a PPS resin to be used in the present invention will be described. First, a polyhalogenated aromatic compound, a sulfidizing agent, a polymerization solvent, a molecular weight modifier, a polymerization modifier, and a polymerization stabilizer that are to be used will be described.

### [Polyhalogenated Aromatic Compound]

The polyhalogenated aromatic compound refers to a compound having two or more halogen atoms in one molecule. Specific examples of the polyhalogenated aromatic compound include *p*-dichlorobenzene, *m*-dichlorobenzene, o-dichlorobenzene, 1,3,5-trichlorobenzene, 1,2,4-trichlorobenzene, 1,2,4,5-tetrachlorobenzene, hexachlorobenzene, 2,5-dichlorotoluene, 2,5-dichloro-*p*-xylene, 1,4-dibromobenzene, 1,4-diiodobenzene and 1-methoxy-2,5-dichlorobenzene, and*p-*dichlorobenzene is used preferably. In addition, two or more different polyhalogenated aromatic compounds can be used in combination to form a copolymer. This copolymer preferably has a *p*-dihalogenated aromatic compound as the major component.

From the viewpoint of obtaining a PPS resin having a viscosity suitable for processing, the amount of the polyhalogenated aromatic compound to be used is, for example, 0.9 to 2.0 mol, preferably 0.95 to 1.5 mol, more preferably 1.005 to 1.2 mol, per 1 mol of a sulfidizing agent.

### [Sulfidizing Agent]

Examples of the sulfidizing agent include an alkali metal sulfide, an alkali metal hydrosulfide, or hydrogen sulfide.

Specific examples of the alkali metal sulfide include lithium sulfide, sodium sulfide, potassium sulfide, rubidium sulfide, cesium sulfide, and mixtures of two or more kinds thereof. Among these, sodium sulfide is preferably used. Any of these alkali metal sulfides can be used in the form of a hydrate, an aqueous mixture, or an anhydride.

Specific examples of the alkali metal hydrosulfide include sodium hydrosulfide, potassium hydrosulfide, lithium hydrosulfide, rubidium hydrosulfide, cesium hydrosulfide, and mixtures of two or more kinds thereof. Among them, sodium hydrosulfide is preferably used. Any of these alkali metal hydrosulfides can be used in the form of a hydrate, an aqueous mixture, or an anhydride.

A sulfidizing agent produced, in situ in a reaction system, from an alkali metal hydrosulfide and an alkali metal hydroxide can also be used. Alternatively, a sulfidizing agent produced from an alkali metal hydrosulfide and an alkali metal hydroxide can be transferred to and used in a polymerization tank.

Alternatively, a sulfidizing agent produced, in situ in a reaction system, from an alkali metal hydroxide, such as lithium hydroxide or sodium hydroxide, and hydrogen sulfide can also be used. Alternatively, a sulfidizing agent produced from an alkali metal hydroxide, such as lithium hydroxide or sodium hydroxide, and hydrogen sulfide can be transferred to and used in a polymerization tank.

In a case in which the sulfidizing agent is partially lost before the start of polymerization reaction, for example, owing to a dehydration operation, the amount of the sulfidizing agent fed means the remaining amount determined by subtracting the loss from the actual amount of the sulfidizing agent fed.

In this regard, an alkali metal hydroxide and/or an alkaline earth metal hydroxide can be used together with the sulfidizing agent. Specific preferable examples of the alkali metal hydroxide include sodium hydroxide, potassium hydroxide, lithium hydroxide, rubidium hydroxide, cesium hydroxide, and mixtures of two or more kinds thereof. Specific examples of the alkaline earth metal hydroxide include calcium hydroxide, strontium hydroxide, barium hydroxide, and the like. Among these, sodium hydroxide is preferably used.

In a case in which an alkali metal hydrosulfide is used as a sulfidizing agent, it is particularly preferable that an alkali metal hydroxide is used simultaneously. The amount of the alkali metal hydroxide to be used is, for example, in the range of from 0.95 to 1.20 mol, preferably from 1.00 to 1.15 mol, still more preferably from 1.005 to 1.100 mol, with respect to 1 mol of the alkali metal hydrosulfide.

### [Polymerization Solvent]

An organic polar solvent is preferably used as the polymerization solvent. Specific examples include: *N*-alkyl pyrrolidones, such as *N*-methyl-2-pyrrolidone and *N*-ethyl-2-pyrrolidone; caprolactams, such as *N*-methyl-ε-caprolactam; aprotic organic solvents, such as 1,3-dimethyl-2-imidazolidinone, *N,N*-dimethylacetamide, *N,N*-dimethylformamide, hexamethylphosphoric triamide, dimethyl sulfone, and tetramethylene sulfoxide; and mixtures thereof. Any of these has a high reaction stability, and thus, is preferably used. Among these, *N*-methyl-2-pyrrolidone (hereinafter abbreviated as NMP in some cases) in particular is preferably used.

The amount of the organic polar solvent to be used is selected from the range of from 2.0 mol to 10 mol, preferably 2.25 to 6.0 mol, more preferably 2.5 to 5.5 mol, per 1 mol of the sulfidizing agent.

### [Molecular Weight Modifier]

For example, for the purpose of forming terminals of the resulting PPS resin or regulating the polymerization reaction or the molecular weight, a monohalogenated compound (not necessarily an aromatic compound) can be used in combination with the above-mentioned polyhalogenated aromatic compound.

### [Polymerization Modifier]

In one of the preferable aspects, a polymerization modifier is used in order to obtain a PPS resin having a relatively high degree of polymerization in a shorter time. The polymerization modifier herein means a substance having the effect of increasing the viscosity of the resulting PPS resin. Specific examples of such a polymerization modifier include organic carboxylates, water, alkali metal chlorides, organic sulfonates, alkali metal sulfates, alkaline earth metal oxides, alkali metal phosphates, and alkaline earth metal phosphates. Any of these polymerization modifiers can be used singly, or two or more of these polymerization modifiers can be used simultaneously. Among them, organic carboxylates and/or water are preferably used.

The above alkali metal carboxylate is a compound represented by the general formula R(COOM)n (wherein R represents a C₁₋₂₀ alkyl group, cycloalkyl group, aryl group, alkyl aryl group, or aryl alkyl group; M represents an alkali metal selected from lithium, sodium, potassium, rubidium, and cesium; and n represents an integer of 1 to 3). The alkali metal carboxylate can be used in the form of a hydrate, an anhydride, or an aqueous solution. Specific examples of the alkali metal carboxylate include lithium acetate, sodium acetate, potassium acetate, sodium propionate, lithium valerate, sodium benzoate, sodium phenylacetate, potassium*p-*toluate, and mixtures thereof.

Such an alkali metal carboxylate may be formed by adding, substantially the same chemical equivalent each, an organic acid to one or more kinds of compounds selected from the group consisting of alkali metal hydroxides, alkali metal carbonates, and alkali metal bicarbonates, and by allowing the resulting mixture to react. Among the above-described alkali metal carboxylates, sodium acetate that is inexpensive and has a suitable solubility in a polymerization system is most preferably used, because a lithium salt is expensive although a lithium salt has a high solubility in a reaction system and a great effect as a modifier, and because potassium, rubidium, and cesium salts conceivably have an insufficient solubility in a reaction system.

In a case in which such a polymerization modifier is used, the amount of the modifier to be used is usually in the range of from 0.01 mol to 0.7 mol with respect to 1 mol of the alkali metal sulfide to be fed. In the sense of obtaining a higher degree of polymerization, the amount is preferably in the range of from 0.1 to 0.6 mol, more preferably in the range of from 0.2 to 0.5 mol.

In addition, using water as a polymerization modifier is one of the effective means for obtaining a resin composition having flowability and high toughness in a highly balanced manner. In such a case, the adding amount of the modifier to be used is usually in the range of from 0.5 mol to 15 mol with respect to 1 mol of the alkali metal sulfide to be fed. In the sense of obtaining a higher degree of polymerization, the amount is preferably in the range of from 0.6 to 10 mol, more preferably in the range of from 1 to 5 mol.

The polymerization modifier is not limited to any particular timing of addition, but may be added at any time during the below-mentioned pre-processing step, at the start of polymerization, or in the middle of polymerization, and may be added in installments. In a case in which an alkali metal carboxylate is used as a polymerization modifier, it is more preferable from the viewpoint of easy addition to add the polymerization modifier at once at the start of the pre-processing step or at the start of polymerization. Alternatively, in a case in which water is used as the polymerization modifier, it is effective that water is added in the middle of the polymerization reaction after the polyhalogenated aromatic compound is fed.

### [Polymerization Stabilizer]

A polymerization stabilizer can be used in order to stabilize the polymerization reaction system, and prevent a side reaction. The polymerization stabilizer contributes to stabilizing the polymerization reaction system, and inhibits an undesired side reaction. One indication of the side reaction is generation of thiophenol. Addition of the polymerization stabilizer can inhibit generation of thiophenol. Specific examples of the polymerization stabilizer include compounds such as alkali metal hydroxides, alkali metal carbonates, alkaline earth metal hydroxides, and alkaline earth metal carbonates. Among these, alkali metal hydroxides such as sodium hydroxide, potassium hydroxide, and lithium hydroxide are preferable. The above-mentioned alkali metal carboxylate also acts as a polymerization stabilizer, and is thus, counted as one of the polymerization stabilizers to be used in the present invention. When the alkali metal hydrosulfide is used as a sulfidizing agent, it is particularly preferable to use an alkali metal hydroxide simultaneously as described above. In this case, an excess of the alkali metal hydroxide relative to the sulfidizing agent can also serve as a polymerization stabilizer.

These polymerization stabilizers can be used singly or in combination of two or more kinds thereof. The polymerization stabilizer is usually used preferably at a ratio of 0.02 to 0.2 mol, more preferably 0.03 to 0.1 mol, still more preferably 0.04 to 0.09 mol, with respect to 1 mol of the fed alkali metal sulfide. Having this ratio within the preferable range produces a sufficient stabilizing effect, is economically advantageous on the other hand, and affords an excellent polymer yield.

The polymerization stabilizer is not limited particularly to any timing of addition, but may be added at any time during the below-mentioned pre-processing step, at the start of polymerization, or in the middle of polymerization, and may be added in installments. It is more preferable from the viewpoint of easiness to add the polymerization stabilizer at once at the start of the pre-processing step or at the start of polymerization.

Next, the pre-processing step, the polymerization reaction step, the recovery step, and the post-processing step will be specifically described in order.

### [Pre-Processing Step]

The sulfidizing agent is usually used in the form of a hydrate. It is here preferable to raise the temperature of a mixture including an organic polar solvent and a sulfidizing agent, and thereby remove an excess amount of water from the system before addition of a polyhalogenated aromatic compound. In this regard, in a case in which too much water has been removed through this operation, it is preferable to add the short amount of water.

As described above, the sulfidizing agent to be used may be produced, in situ in a reaction system, from an alkali metal hydrosulfide and an alkali metal hydroxide. Alternatively, an alkali metal sulfide produced in a tank other than a polymerization tank can be used. A method of such production is not limited to any particular method, and may be, for example, a method in which an alkali metal hydrosulfide and an alkali metal hydroxide are added to an organic polar solvent preferably under an inert gas atmosphere in the temperature range of from ordinary temperature to 150°C, preferably from ordinary temperature to 100°C, and the temperature of the resulting mixture is raised to at least 150°C or higher, preferably 180 to 260°C, under ordinary pressure or under reduced pressure to distill off water. At this stage, a polymerization modifier may be added. In addition, the reaction may be performed with toluene or the like added in order to facilitate removal of water.

The water content in the polymerization system during the polymerization reaction is preferably 0.5 to 10.0 mol per 1 mol of the fed sulfidizing agent. Here, the water content in the polymerization system is an amount determined by subtracting the amount of water removed from the polymerization system from the amount of water fed to the polymerization system. In addition, the water to be fed may be in any form, such as water, an aqueous solution, or water of crystallization.

### [Polymerization Reaction Step]

It is preferable that PPS resin powder particles are produced by allowing the sulfidizing agent to react with the polyhalogenated aromatic compound in the organic polar solvent in the temperature range of 200°C or more and lower than 290°C.

When the polymerization reaction step is started, the sulfidizing agent and the polyhalogenated aromatic compound are added to the organic polar solvent preferably under an inert gas atmosphere in the temperature range of from ordinary temperature to 215°C, preferably from 100 to 215°C. At this stage, a polymerization modifier may be added. The order of feeding these raw materials may be in random order, or may be simultaneously.

The temperature of this mixture is usually raised to a temperature in the range of from 200°C to 290°C. The temperature-raising rate is not limited to any particular value. A rate of 0.01 to 5°C/minute is usually selected, and the range of from 0.1 to 3°C/minute is more preferable.

In general, the temperature is finally raised to 250 to 290°C, and the reaction is allowed at the temperature usually for 0.25 to 50 hours, preferably 0.5 to 20 hours.

A method in which the temperature is raised to 270 to 290°C after the reaction is allowed, for example, at 200°C to 245°C for a given time at the stage prior to reaching the final temperature is effective to achieve a higher degree of polymerization. When this is done, the range of from 0.25 hours to 20 hours or preferably the range of from 0.25 to 10 hours is usually selected as the reaction time at 200°C to 245°C.

In this regard, multi-stage polymerization is effective to obtain a polymer having a higher degree of polymerization. The multi-stage polymerization is performed effectively at the time when the conversion ratio of the polyhalogenated aromatic compound in a system at 245°C reaches 40 mol% or more, preferably 60 mol%.

### [Recovery Step]

A solid substance is recovered from a polymerization reactant including a polymer, the solvent, and the like after the end of polymerization.

A most preferable method of recovering a PPS resin is performed under rapid cooling conditions. A preferable method among such recovery methods is, for example, a flushing method. The flushing method is a method in which a polymerization reactant in a high-temperature and high-pressure state (usually 250°C or more and 8 kg/cm² or more) is flushed into an atmosphere under ordinary pressure or reduced pressure, whereby the polymer in the form of powder particles is recovered simultaneously with the recovery of the solvent. As used herein, flushing means spouting the polymerization reactant from a nozzle. More specifically, the atmosphere into which the polymerization reactant is flushed is, for example, nitrogen or steam at ordinary pressure, and the range of from 150°C to 250°C is usually selected as the flushing temperature.

The flushing method makes it possible to recover a solid substance simultaneously with the recovery of a solvent, and in addition, to make the recovery time relatively shorter, and thus, is a recovery method having an economically excellent efficiency. In this recovery method, an ionic compound typified by Na and an organic compound having a low degree of polymerization (an oligomer) tend to be taken in a polymer in a solidification process.

However, a method of recovering a PPS resin to be used in the present invention is not limited to a flushing method. A method in which a particulate polymer is recovered through slow cooling (a quenching method) may be used as long as the method satisfies the requirements of the present invention. However, in light of economical efficiency and performance, it is more preferable that a PPS resin recovered by a flushing method is used in a producing method according to the present invention.

### [Post-processing Step]

A PPS resin to be preferably used in the present invention is, for example, a PPS resin obtained through the above-mentioned polymerization reaction step and recovery step, and thermally oxidized. The thermal oxidizing step is also preferably preceded by a hot-water treatment step and an acid treatment step. In addition, the acid treatment step and the hot-water treatment step may be preceded by a step of washing with an organic solvent.

An acid to be used for the acid treatment in the present invention is not limited to any particular acid as long as the acid has no effect of decomposing the PPS resin. Examples of the acid include acetic acid, hydrochloric acid, sulfuric acid, phosphoric acid, silicic acid, carbonic acid, and propyl acid. Among these, acetic acid and hydrochloric acid are more preferably used, and it is preferable to avoid an acid, such as nitric acid, that decomposes and degrades a PPS resin.

Water to be used with an aqueous solution of an acid is preferably distilled water or deionized water. The aqueous solution of an acid preferably has a pH of 1 to 7, more preferably a pH of 2 to 4. Having a pH of 7 or less prevents the metal content of the PPS resin from increasing, and having a pH of 1 or more can prevent the volatile component content of the PPS resin from increasing.

In the acid treatment method, the PPS resin is preferably immersed in an acid or an aqueous solution of an acid, and the resulting mixture can suitably be stirred or heated, if needed. The temperature for the heating is preferably 80 to 250°C, more preferably 120 to 200°C, still more preferably 150 to 200°C. At 80°C or more, the acid treatment effect is sufficient, and the metal content does not increase. At 250°C or less, the pressure can be effectively prevented from becoming too high. In addition, the pH of the aqueous solution of an acid in which the PPS resin is immersed and treated is preferably 8 or less as a result of the acid treatment, and the pH is more preferably 2 or more and less than 8. Having a pH of 8 or less makes it possible to effectively prevent the metal content of the resulting PPS resin from increasing.

The time for the acid treatment is preferably a period of time during which the reaction between the PPS resin and the acid is sufficiently equilibrated. The period of time is preferably 2 to 24 hours for the treatment at 80°C, preferably 0.01 to 5 hours for the treatment at 200°C.

It is preferable that the PPS resin is sufficiently immersed in an acid or an aqueous solution of an acid when treated. In terms of the ratio of the acid or the aqueous solution of an acid to the PPS resin acid in the acid treatment, the amount of the acid or the aqueous solution of an acid is preferably 0.5 to 500 L, more preferably 1 to 100 L, still more preferably 2.5 to 20 L, with respect to 500 g of the PPS resin. Having 0.5 L or more of the acid or the aqueous solution of an acid with respect to 500 g of the PPS resin allows the PPS resin to be immersed sufficiently in the aqueous solution, and thus, washed sufficiently, enabling the metal content of the PPS resin to be effectively prevented from increasing. In addition, having 500 L or less of the acid or the aqueous solution of an acid with respect to 500 g of the PPS resin allows the amount of the solution with respect to the amount of the PPS resin to be suitable, resulting in an excellent production efficiency.

For example, such an acid treatment is performed by a method in which a predetermined amount of the PPS resin is added to a predetermined amount each of water and acid, and the resulting mixture is heated with stirring in a pressure vessel, or a method in which an acid treatment is continuously performed. As a method of separating the treated solution from the acid treatment into an aqueous solution and a PPS resin, filtration with a sieve or a filter is simple and convenient. Examples of such a method include a method such as natural filtration, pressure filtration, vacuum filtration, or centrifugal filtration. The PPS resin is preferably washed with water or warm water several times in order to remove the acid and impurities remaining on the surface of the PPS resin separated from the treated solution. Examples of such a washing method include a method in which the aqueous solution and the PPS resin are separated, for example, by a method in which the PPS resin on a filtration device is filtrated with water being poured thereonto, or by a method in which the PPS resin separated is added to water provided preliminarily, and filtrated again. Water to be used for washing is preferably distilled water or deionized water.

In the present invention, a hot-water treatment is preferably performed before the acid treatment step, for example by the following method. Water to be used for a hot-water treatment in the present invention is preferably distilled water or deionized water. The temperature for the hot-water treatment is preferably 80 to 250°C, more preferably 120 to 200°C, still more preferably 150 to 200°C. At 80°C or more, the hot-water treatment effect is sufficient, and the amount of generation of volatile gas can be made small. At 250°C or more, the pressure can be effectively prevented from becoming too high.

The time for the hot-water treatment is preferably a period of time during which an extraction treatment with the PPS resin and hot water is sufficient. The period of time is preferably 2 to 24 hours for the treatment at 80°C, preferably 0.01 to 5 hours for the treatment at 200°C.

It is preferable that the PPS resin is sufficiently immersed in water when treated. In terms of the ratio of the water to the PPS resin in the hot-water treatment, the amount of the water is preferably 0.5 to 500 L, more preferably 1 to 100 L, still more preferably 2.5 to 20 L, with respect to 500 g of the PPS resin. Having 0.5 L or more of water with respect to 500 g of the PPS resin allows the PPS resin to be immersed sufficiently in water, and washed sufficiently, enabling the amount of generation of volatile gas to be smaller. In addition, having 500 L or less of water with respect to 500 g of the PPS resin allows the amount of the water with respect to the PPS resin to be suitable, resulting in an excellent production efficiency.

For example, such a hot-water treatment is not limited to any particular operation, but is performed by a method in which a predetermined amount of the PPS resin is added to a predetermined amount of water, and the resulting mixture is heated with stirring in a pressure vessel, or a method in which a hot-water treatment is continuously performed. A method of separating the treated solution from the hot-water treatment into an aqueous solution and a PPS resin is not limited to any particular method. Filtration with a sieve or a filter is simple and convenient. Examples of such a method include natural filtration, pressure filtration, vacuum filtration, centrifugal filtration, or the like. The PPS resin is preferably washed with water or warm water several times in order to remove impurities remaining on the surface of the PPS resin separated from the treated solution. Such a washing method is not limited to any particular method. Examples of such a washing method include a method in which the aqueous solution and the PPS resin are separated, for example, by a method in which the PPS resin on a filtration device is filtrated with water being poured thereonto, or by a method in which the PPS resin separated is added to water provided preliminarily, and filtrated again. Water to be used for washing is preferably distilled water or deionized water.

In addition, to avoid the decomposition of a terminal group of the PPS during these acid treatment and hot-water treatment, the acid treatment and the hot-water treatment are preferably performed in an inert atmosphere. Examples of such an inert atmosphere include nitrogen, helium, argon, and the like, and a nitrogen atmosphere is preferable from the viewpoint of economical efficiency.

In the present invention, the acid treatment step and the hot-water treatment step may be preceded by a step of washing with an organic solvent. Such a method is as follows. An organic solvent to be used to wash the PPS resin in the present invention is not limited to any particular solvent as long as the solvent does not have, for example, the effect of decomposing the PPS resin. Examples of the organic solvent include: nitrogen-containing polar solvents such as N-methyl-2-pyrrolidone, dimethylformamide, dimethylacetamide, 1,3-dimethylimidazolidinone, hexamethylphosphoramide, and piperazinones; sulfoxide/sulfone solvents such as dimethyl sulfoxide, dimethyl sulfone, and sulfolane; ketone solvents such as acetone, methyl ethyl ketone, diethyl ketone, and acetophenone; ether solvents such as dimethyl ether, dipropyl ether, dioxane, and tetrahydrofuran; halogen solvents such as chloroform, methylene chloride, trichloroethylene, ethylene dichloride, perchloroethylene, monochloroethane, dichloroethane, tetrachloroethane, perchloroethane, and chlorobenzene; alcohol/phenol solvents such as methanol, ethanol, propanol, butanol, pentanol, ethylene glycol, propylene glycol, phenol, cresol, polyethylene glycol, and polypropylene glycol; and aromatic hydrocarbon solvents such as benzene, toluene, and xylene. Among these organic solvents, N-methyl-2-pyrrolidone, acetone, dimethylformamide, chloroform, or the like is particularly preferably used. In addition, these organic solvents are used singly or in mixture of two or more kinds thereof.

Examples of a method of washing with an organic solvent include a method in which the PPS resin is immersed in an organic solvent. If needed, the resulting mixture can be suitably stirred or heated. The washing temperature during washing of the PPS resin with an organic solvent is not limited to any particular value, but any temperature between ordinary temperature and approximately 300°C can be selected. A higher washing temperature tends to afford a higher washing efficiency. The washing temperature between ordinary temperature and 150°C usually achieves a sufficient effect. It is also possible that the washing is performed under pressure at a temperature equal to or higher than the boiling point of the organic solvent in a pressure vessel. In addition, the washing time is not limited to any particular value. The washing time depends on the washing conditions. In the case of batch washing, washing for 5 minutes or more usually affords a sufficient effect. In addition, continuous washing is possible.

These acid treatment, hot-water treatment, and washing with an organic solvent can be performed in suitable combination.

A PPS resin to be used in the present invention preferably has a melt flow rate in the range of from 100 to 4,000 g/10 minutes (as measured at a temperature of 315.5°C under a load of 5,000 g in accordance with ASTM D-1238-70). The melt flow rate of 100 g/10 minutes or more does not cause the melt flowability of the PPS resin composition to be worsened markedly, even in a case in which the composition, when used, is highly loaded with a filler in particular. Thus, the composition can be molded stably. In addition, bringing the melt flow rate to 4,000 g/10 minutes or less makes it possible to maintain the strength of a molded product composed of the PPS resin composition.

A resin composition according to the present invention includes 100 parts by weight of a PPS resin and 16 to 50 parts by weight of (B) a polyamide resin as defined in claim 1. The polyamide resin (B) is a thermoplastic resin having a tracking resistance of 125 V or more based on the IEC60112 standard, and having a glass-transition temperature of 0°C or more. The polyamide resins of claim 1 may be one or more selected from: nylon 6, nylon 66, nylon 46, nylon 610, nylon 612, nylon 11, nylon 12, and aromatic nylon.

Among these, polyamide resins, nylon 6, nylon 610, nylon 612, nylon 11, and nylon 12 are preferable. Furthermore, the polyamide resin of claim 1 may have a repeating unit represented by the following structural formula.

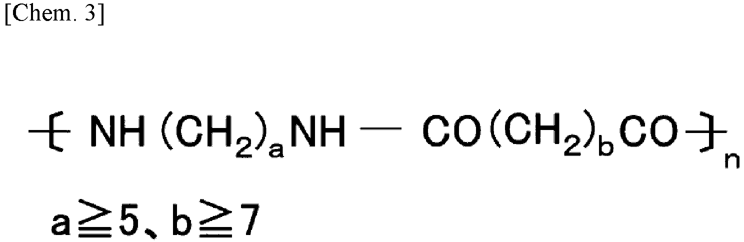

Here, in the structural formula, a is a natural number of 5 or more, and represents the number of repeating units that are methylene groups, and b is a natural number of 7 or more, and represents the number of repeating units that are methylene groups. A polyamide resin having an aliphatic structure having such a relatively long chain tends less to form a conducting carbonized path during a tracking resistance test, and is advantageous in enhancing the electrical characteristics. Here, a as a natural number is essentially 5 or more, more preferably 6 or more. In addition, b as a natural number is essentially 7 or more, more preferably 8 or more. Among these, polyamide 610 wherein a is 6, and b is 8, and polyamide 612 wherein a is 6, and b is 10 are examples of a preferable polyamide resin. With regard to the upper limit of each of a and b, a is preferably 10 or less, b is preferably 14 or less, from the viewpoint of maintaining the flowability well. n represents the repeating number of structural units of a polyamide resin, and is usually 100 or more and 100,000 or less.

(B) the polyamide resin to be used in the present invention preferably has a water absorption rate is 0.5 wt% or less, more preferably 0.3 wt% or less, when the resin has been immersed in water at 23°C for 24 hours. This is because controlling particularly the water absorption rate of (B) the polyamide resin to be added is preferable in order that the PPS resin composition having water absorbed therein maintains excellent tracking resistance, mechanical strength, dimensional stability, and hygrothermal stability.

In this regard, the water absorption rate herein is a percentage value determined by immersing (B) the polyamide resin in water at 23°C for 24 hours in accordance with ASTM-D570, and dividing the weight difference of (B) the polyamide resin between before and after the immersing treatment by the weight of (B) the polyamide resin before the immersing treatment.

The blending amount of (B) the polyamide resin to be used in the present invention is in the range of 16 to 50 parts by weight with respect to 100 parts by weight of the PPS resin. The amount of (B) the polyamide resin is preferably 20 to 40 parts by weight. Allowing the blending amount of (B) the polyamide resin to be more than 50 parts by weight worsens the excellent characteristics of the PPS resin, such as heat resistance, flame resistance, dimensional stability, hydrolysis resistance, and low water absorption. Having less than 16 parts by weight of (B) the polyamide resin does not make it possible to obtain the effect of exhibiting tracking resistance.

Examples of (C) the epoxy group-containing olefinic copolymer to be used in the present invention include known epoxy group-containing olefinic copolymers. Specific examples include an epoxy group-containing olefinic copolymer obtained by incorporating a monomer component having an epoxy group (a functional group-containing component) into the following: a (co)polymer obtained by polymerizing one or more kinds of α-olefins such as ethylene, propylene, 1-butene, 1-pentene, 1-octene, 4-methyl-1-pentene, or isobutylene; or a copolymer between an α-olefin and an α,β-unsaturated acid or an alkyl ester thereof, such as an acrylic acid, methyl acrylate, ethyl acrylate, butyl acrylate, methacrylic acid, methyl methacrylate, ethyl methacrylate, or butyl methacrylate, examples of the copolymer including an ethylene/propylene copolymer ("/" represents a copolymer, and the same applies hereinafter), ethylene/1-butene copolymer, ethylene/1-hexene, ethylene/1-octene, ethylene/methyl acrylate copolymer, ethylene/ethyl acrylate copolymer, ethylene/butyl acrylate copolymer, ethylene/methyl methacrylate copolymer, ethylene/ethyl methacrylate copolymer, ethylene/butyl methacrylate copolymer, and the like. Examples of the functional group-containing component include epoxy group-containing monomers such as glycidyl acrylate, glycidyl methacrylate, glycidyl ethacrylate, glycidyl itaconate, glycidyl citraconate, and the like. A method of incorporating such a functional group-containing component is not limited to any particular method. Examples of a method that can be used include: copolymerizing the component during the (co)polymerization of olefin (co)polymers; and grafting the component to an olefin (co)polymer using a radical initiator. It is suitable that the amount of the functional group-containing component to be incorporated is preferably in the range of from 0.001 to 40 mol%, more preferably from 0.01 to 35 mol%, with respect to all the monomers constituting the epoxy group-containing olefin (co)polymer. Specific examples of a useful olefinic copolymer obtained by incorporating an epoxy group-containing monomer component in particular include an ethylene/propylene-g-glycidyl methacrylate copolymer ("g" represents a graft, and the same applies hereinafter), ethylene/1-butene-g-glycidyl methacrylate copolymer, ethylene/glycidyl acrylate copolymer, ethylene/glycidyl methacrylate copolymer, ethylene/methyl acrylate/glycidyl methacrylate copolymer, and ethylene/methyl methacrylate/glycidyl methacrylate copolymer. Alternatively, an epoxy group-containing olefinic copolymer further containing another monomer as an essential component, in addition to an α-olefin, such as ethylene or propylene, and a glycidyl ester of an α,β-unsaturated acid, is also used suitably.

Preferable examples of (C) the epoxy group-containing olefinic copolymer include an ethylene/glycidyl methacrylate copolymer, ethylene/methyl acrylate/glycidyl methacrylate copolymer, and ethylene/methyl methacrylate/glycidyl methacrylate copolymer. Among others, an ethylene/glycidyl methacrylate copolymer is particularly preferable.

The blending amount of (C) the epoxy group-containing olefinic copolymer in the present invention is selected from the range of from 10 to 25 parts by weight, more preferably 10 to 20 parts by weight, with respect to 100 parts by weight of the PPS resin. The blending amount of more than 25 parts by weight impairs the mechanical strength and low gas characteristics intrinsically possessed by the PPS resin, and less than 10 parts by weight diminishes the effect of exhibiting the toughness.

Next, examples of (D) the olefinic copolymer having no polar functional group and to be used in the present invention include known unmodified olefinic copolymers. Specific examples of such a copolymer include: a (co)polymer obtained by polymerizing one or more kinds of α-olefins such as ethylene, propylene, 1-butene, 1-pentene, 1-octene, 4-methyl-1-pentene, and isobutylene. Examples of the (co)polymer include an ethylene/propylene copolymer, ethylene/1-butene copolymer, ethylene/1-hexene copolymer, and ethylene/1-octene copolymer. In addition, a hydrogenated product of a styrene/ethylene/butadiene copolymer is also useful.

In this regard, examples of a particularly preferable olefinic copolymer having no polar functional group include an ethylene/1-butene copolymer.

The blending amount of (D) the olefinic copolymer having no polar functional group in the present invention is selected from the range of from 10 to 25 parts by weight, more preferably from 10 to 20 parts by weight, with respect to 100 parts by weight of the PPS resin. The blending amount of more than 25 parts by weight impairs the mechanical strength and low gas characteristics intrinsically possessed by the PPS resin, and less than 10 parts by weight diminishes the effect of exhibiting the toughness.

A PPS resin composition according to the present invention has tracking resistance and toughness that are enhanced in a balanced manner without significantly impairing the excellent mechanical strength intrinsically possessed by a PPS resin. To exhibit such characteristics, it is necessary that the PPS resin forms a sea phase (a continuous phase or matrix), and that (B) the polyamide resin, (C) the epoxy group-containing olefinic copolymer, and (D) the olefinic copolymer having no polar functional group form island phases (dispersed phases). Furthermore, the number average dispersed particle size of (B) the polyamide resin, (C) the epoxy group-containing olefinic copolymer, and (D) the olefinic copolymer having no polar functional group needs to be 500 nm or less. The lower limit of the number average dispersed particle size is preferably 1 nm or more from the viewpoint of productivity. On the other hand, if the number average dispersed particle size is more than 500 nm, in other words, if a large aggregate is present, the aggregate becomes a starting point of breaking during a tensile test and a bending test, decreasing the mechanical strength and the toughness.

In a method of regulating the number average dispersed particle size of the island phases in the PPS resin composition to 500 nm or less, the ratio (C)/(D) of the blending amount of (C) the epoxy group-containing olefinic copolymer to the blending amount of (D) the olefinic copolymer having no polar functional group with respect to at least 100 parts by weight of the PPS resin is preferably in the range of from 0.6 to 2. Selecting this range makes it possible to regulate the number average dispersed particle size of the island phases in the PPS resin composition to 500 nm or less, and to achieve both tracking resistance and toughness at a high level.

The number average dispersed particle size mentioned here is determined as follows: a type A1 test piece prescribed in ISO20753 is molded at a molding temperature equal to the melting peak temperature of the PPS resin plus 20 to 40°C; a thin piece, 0.1 µm or less, is cut out of the central portion of the test piece in the cross-sectional area direction of the dumbbell piece at -20°C; 100 island phases freely selected in the piece cut out are observed at a magnification of 1,000 times under a model H-7100 transmission electron microscope manufactured by Hitachi, Ltd.; the maximum diameter and minimum diameter of each island phase are first measured to determine a biaxial average particle size; and then, the average of the values of the 100 pieces is determined as the particle size.

Furthermore, in the present invention, the ratio (B)/((C) + (D)) of the blending amount of (B) the polyamide resin to the total blending amount of (C) the epoxy group-containing olefinic copolymer and (D) the olefinic copolymer having no polar functional group is preferably 1.1 to 2, more preferably 1.1 to 1.7. Having a value of 2 or less as the ratio (B)/((C) + (D)) makes it possible to maintain the excellent mechanical strength and low gas characteristics possessed by the PPS resin, and 1.1 or more makes it possible to obtain the effect of exhibiting excellent tracking resistance and toughness.

In the present invention, it is essential to blend in (E) the fibrous filler. Specific examples include stainless-steel fibers, aluminum fibers, brass fibers, rock wool, PAN-based and pitch-based carbon fibers, carbon nanotubes, carbon nanofibers, calcium carbonate whiskers, wollastonite whiskers, potassium titanate whiskers, barium titanate whiskers, aluminum borate whiskers, silicon nitride whiskers, aramid fibers, alumina fibers, silicon carbide fibers, asbestos fibers, gypsum fibers, ceramic fibers, zirconia fibers, silica fibers, glass fibers, titanium oxide fibers, silicon carbide fibers, and the like. These can be used in combination of two or more kinds thereof. In addition, in the sense of obtaining more excellent mechanical strength, such a fibrous filler, when used, is preferably pretreated with a coupling agent, such as an isocyanate compound, organosilane compound, organotitanate compound, organoborane compound, or epoxy compound.

Among these, at least one selected from glass fibers and carbon fibers is preferable to obtain the effect of enhancing the stiffness of the material.

The blending amount of (E) the fibrous filler in the present invention is selected from the range of from 40 to 140 parts by weight, more preferably from 50 to 130 parts by weight, with respect to 100 parts by weight of the PPS resin. The blending amount of less than 40 parts by weight will cause the mechanical strength to be insufficient, and the blending amount of more than 140 parts by weight will cause a larger adverse influence on the toughness.

A PPS resin composition according to the present invention may further contain an inorganic filler other than (E) the fibrous filler, to the extent that the effects of the present invention are not impaired. Such an inorganic filler that can be added is not limited to any particular filler. Specific examples include: silicates such as talc, wollastonite, zeolite, sericite, mica, kaolin, clay pyrophyllite, bentonite, asbestos, alumina silicate, and hydrotalcite; oxides such as silicon oxide, magnesium oxide, aluminum oxide (alumina), silica (crushed or spherical), quartz, glass beads, glass flakes, crushed or amorphous glass, glass microballoon, molybdenum disulfide, aluminum oxide (crushed), translucent alumina (a fibrous, plate-like, scaly, particulate, amorphous, or crushed product), titanium oxide (crushed), and zinc oxide (a fibrous, plate-like, scaly, particulate, amorphous, or crushed product); carbonates such as calcium carbonate, magnesium carbonate, and zinc carbonate; sulfates such as calcium sulfate and barium sulfate; hydroxides such as calcium hydroxide, magnesium hydroxide, and aluminum hydroxide; silicon carbide; carbon black and silica; graphite; aluminum nitride; translucent aluminum nitride (a fibrous, plate-like, scaly, particulate, amorphous, or crushed product); calcium polyphosphate; graphite; metal powder; metal flake; metal ribbon; metal oxide; and the like. Here, specific examples of the kind of metal for the metal powder, metal flake, and metal ribbon include silver, nickel, copper, zinc, aluminum, stainless-steel, iron, brass, chromium, and tin. Additional examples include carbon powder, graphite, carbon flake, scaly carbon, fullerene, graphene, and the like. These may be hollow. Furthermore, these fillers can be used in combination of two or more kinds thereof. In addition, any of these inorganic fillers may be pretreated with a coupling agent, such as an isocyanate compound, organosilane compound, organotitanate compound, organoborane compound, or epoxy compound. Among these, calcium carbonate, carbon powder, and graphite are preferable. The lower limit of the blending amount of such an inorganic filler other than (E) the fibrous filler is preferably 0 part by weight or more, more preferably 0.1 part by weight or more, with respect to 100 parts by weight of the PPS resin. The upper limit is preferably 50 parts by weight or less, more preferably 40 parts by weight or less.

Furthermore, for the purpose of enhancing the mechanical strength, toughness, and the like, a silane compound having at least one functional group selected from an epoxy group, amino group, isocyanate group, hydroxyl group, mercapto group, and ureido group may be added to a PPS resin composition to be used in the present invention to the extent that the effects of the present invention are not impaired. Specific examples of such a compound include: epoxy group-containing alkoxysilane compounds such as γ-glycidoxypropyltrimethoxysilane, γ-glycidoxypropyltriethoxysilane and β-(3,4-epoxycyclohexyl)ethyltrimethoxysilane; mercapto group-containing alkoxysilane compounds such as γ-mercaptopropyltrimethoxysilane and γ-mercaptopropyltriethoxysilane; ureido group-containing alkoxysilane compounds such as γ-ureidopropyltriethoxysilane, γ-ureidopropyltrimethoxysilane, and γ-(2-ureidoethyl)aminopropyltrimethoxysilane; isocyanate group-containing alkoxysilane compounds such as γ-isocyanatopropyltriethoxysilane, γ-isocyanatopropyltrimethoxysilane, γ-isocyanatopropylmethyldimethoxysilane, γ-isocyanatopropylmethyldiethoxysilane, γ-isocyanatopropylethyldimethoxysilane, γ-isocyanatopropylethyldiethoxysilane, and γ-isocyanatopropyltrichlorosilane; and amino group-containing alkoxysilane compounds such as γ-(2-aminoethyl)aminopropylmethyldimethoxysilane, γ-(2-aminoethyl)aminopropyltrimethoxysilane, γ-aminopropyltrimethoxysilane, and γ-aminopropyltriethoxysilane; hydroxyl group-containing alkoxysilane compounds such as γ-hydroxypropyltrimethoxysilane and γ-hydroxypropyltriethoxysilane; and the like. Among these, an alkoxysilane having an epoxy group, amino group, isocyanate group, or hydroxyl group is particularly suitable to afford an excellent weld strength. In a case in which such a silane compound is added, the suitable adding amount is in the range of from 0.05 to 3 parts by weight with respect to 100 parts by weight of the PPS resin.

In this regard, a usual additive as a component other than above-mentioned can be added to a PPS resin composition according to the present invention to the extent that the effects of the present invention are not impaired. Examples of the additive include: an antioxidant; heat-resistant stabilizer (hindered phenol-based, hydroquinone-based, phosphorus-based, phosphite-based, amine-based, or sulfur-based heat-resistant stabilizer, a substitution product thereof, or the like); weathering agent (resorcinol-based, salicylate-based, benzotriazole-based, benzophenone-based, or hindered amine-based weathering agent, or the like); release agent and lubricant (montanoic acid and metal salt thereof, ester thereof, half ester thereof, stearyl alcohol, stearamide, stearate, bisurea, or the like); pigment (cadmium sulfide, phthalocyanine, carbon black for coloring, or the like); dye (nigrosin or the like); antistatic agent (alkyl sulfate type anionic antistatic agent, quaternary ammonium salt type cationic antistatic agent, nonionic antistatic agent such as polyoxyethylene sorbitan monostearate, betaine-based zwitterionic antistatic agent, or the like); flame retardant (for example, red phosphorus, phosphate ester, melamine cyanurate, ammonium polyphosphate, the like); heat stabilizer; lubricants, such as calcium stearate, aluminum stearate, and lithium stearate; strength enhancing agents, for example, bisphenol epoxy resins, such as bisphenol A, novolac phenol epoxy resins, and cresol novolac epoxy resins; anti-ultraviolet agents; coloring agents; flame retardants, foaming agents, and the like. The lower limit of the blending amount of such another component is preferably 0 part by weight or more, more preferably 0.01 part by weight or more, with respect to 100 parts by weight of the PPS resin, and the upper limit is preferably 5 parts by weight or less, more preferably 3 parts by weight or less. Among these additives, an antioxidant and a heat-resistant stabilizer (hindered phenol-based, hydroquinone-based, phosphorus-based, phosphite-based, amine-based, or sulfur-based stabilizer, a substitution product thereof, or the like) are preferably used.

A phosphorus-based antioxidant and a hindered phenol-based antioxidant are more preferably used.

Specific examples of the above-described phosphorus-based and phosphite-based antioxidants include tetrakis(2,4-di-*t*-butylphenyl)-4,4'-biphenylene phosphonite, bis(2,6-di-*t*-butyl-4-methylphenyl)pentaerythritol-di-phosphite, 2,2-methylenebis(4,6-di-*t*-butylphenyl)octyl phosphite, triphenyl phosphite, tris(2,4-di-*t-*butylphenyl)phosphite, diphenylisodecyl phosphite, phenyldiisodecyl phosphite, 4,4-butylidene-bis(3-methyl-6-*t*-butylphenyl-di-tridecyl)phosphite, cyclic neopentanetetraylbis(octadecyl phosphite), cyclic neopentanetetraylbis(2,6-di-*t-*butyl-4-methyl phenyl)phosphite, tris(nonylphenyl)phosphite, diisodecylpentaerythritol diphosphite, 9,10-dihydro-9-oxa-10-phosphaphenanthrene-10-oxide, 10-(3,5-di-*t*-butyl-4-hydroxybenzyl)-9,10-dihydro-9-oxa-10-phosphaphenanthrene-10-oxide, 10-decyloxy-9,10-dihydro-9-oxa-10-phosphaphenanthrene, mixtures thereof, and the like.

Examples of the hindered phenol-based antioxidant include triethylene glycol-bis[3-(3-t-butyl-5-methyl-4-hydroxyphenyl)propionate, 4,4'-butylidenebis(3-methyl-6-*t*-butylphenol), 1,6-hexanediol-bis[3-(3,5-di-*t*-butyl-4-hydroxyphenyl)propionate], 2,4-bis-(*n*-octylthio)-6-(4-hydroxy-3,5-di-*t*-butylanilino)-1,3,5-triazine, pentaerythrityl-tetrakis[3-(3,5-di-*t*-butyl-4-hydroxy phenyl)propionate], 2,2-thiodiethylenebis[3-(3,5-di-*t*-butyl-4-hydroxyphenyl)propionate], octadecyl-3-(3,5-di-*t-*butyl-4-hydroxy phenyl)propionate, 2,2-thiobis(4-methyl-6-*t*-butylphenol), N,N'-hexamethylenebis(3,5-di-*t*-butyl-4-hydroxy-hydrocinnamamide), 3,5-di-*t*-butyl-4-hydroxy-benzylphosphonate-diethyl ester, 1,3,5-trimethyl-2,4,6-tris(3,5-di-butyl-4-hydroxybenzyl)benzene, bis(3,5-di-*t*-butyl-4-hydroxy benzyl sulfonic acid ethyl calcium, tris-(3,5-di-*t*-butyl-4-hydroxybenzyl)-isocyanurate, 2,6-di-*t*-butyl-*p*-cresol, butylated hydroxyanisole, 2,6-di-*t*-butyl-4-ethylphenol, stearyl-β-(3,5-di-*t*-butyl-4-hydroxyphenyl)propionate, 2,2'-methylenebis-(4-methyl-6-*t*-butylphenol), 2,2'-methylene-bis-(4-ethyl-6-*t*-butylphenol), 4,4'-thiobis-(3-methyl-6-*t*-butylphenol), octylated diphenylamine, 2,4-bis[(octylthio)methyl]-*o*-cresol, isooctyl-3-(3,5-di-*t-*butyl-4-hydroxyphenyl)propionate, 4,4'-butylidenebis(3-methyl-6-*t*-butylphenol), 3,9-bis[1,1-dimethyl-2-[β-(3-*t*-butyl-4-hydroxy-5-methylphenyl)propionyloxy]ethyl] 2,4,8,10-tetraoxaspiro[5,5]undecane, benzene propanoic acid,3-(1,1-dimethylethyl)-4-hydroxy-5-methyl-2,4,8,10-tetraoxapiro[5.5]undecane-3,9-diylbis(2,2-dimethyl-2,1-ethanediyl)ester, 1,1,3-tris(2-methyl-4-hydroxy-5-t-butylphenyl)butane, 1,3,5-trimethyl-2,4,6-tris(3,5-di-*t*-butyl-4-hydroxybenzyl)benzene, bis[3,3'-bis-(4'-hydroxy-3'-t-butylphenyl)butyric acid] glycol ester, 1,3,5-tris(3',5'-di-*t*-butyl-4'-hydroxyb enzyl)-*sec*-triazine-2,4,6-(1*H*,3*H*,5*H*)trione, d-α-tocopherol, 3,9-bis(2-(3-(3-tertiarybutyl-4-hydroxy-5-methylphenyl)propionyloxy)-1,1-dimethylethyl)-2,4,8,10-tetraoxaspiro[5.5]undecane, mixtures thereof, and the like.

Examples of the amine-based antioxidant include succinic dimethyl-1-(2-hydroxyethyl)-4-hydroxy-2,2,6,6-tetramethylpiperidine polycondensate, poly[{6-(1,1,3,3,-tetramethylbutyl)amino-1,3,5-triazine-2,4-diyl}{(2,2,6,6,-tetramethyl-4-piperidyl)imino}hexamethylene{(2,2,6,6,-tetramethyl-4-piperidyl)imino}], 2-(3,5-di*t*-butyl-4-hydroxybenzyl)-2-n-butylmalonic bis(1,2,2,6,6-pentamethyl-4-piperidyl), tetrakis(2,2,6,6-tetramethyl-4-piperidyl)1,2,3,4-butanetetracarboxylate, bis-2,2,6,6-tetramethyl-4-piperidyl-sebacate, bis(1,2,2,6,6-pentamethyl-4-piperidyl)sebacate, methyl(1,2,2,6,6-pentamethyl-4-piperidyl)sebacate, 1-[2-[3-(3.5-di-*t*-butyl-4-hydroxyphenyl)propionyloxy]ethyl]-4-[3-(3,5-*t*-butyl-hydroxyphenyl)propionyloxy]2,2,6,6-tetramethyl piperidine, 4-benzoyloxy-2,2,6,6-tetramethylpiperidine, mixture thereof, and the like.

Examples of the sulfur-based antioxidant include 4,4'-thiobis(6-*t*-butyl-3-methylphenol), dialkyl(C12-18)3,3'-thiodipropionate, pentaerythrityltetrakis(3-laurylthiopropionate), mixtures thereof, and the like.

A method of preparing the PPS resin composition is not limited to any particular method. Typical examples include a method in which raw materials are supplied to a conventionally known melt-mixing machine, such as a single-screw or twin-screw extruder, banbury mixer, kneader, mixing roll, or the like, and kneaded at a temperature of 280 to 380°C. The mixing order of the raw materials is not limited to any particular order. A method that may be used is, for example, any of the following: a method in which all raw materials are blended and then melt-kneaded by the above-mentioned method; a method in which part of the raw materials are blended and then melt-kneaded by the above-mentioned method, and the remaining raw materials are further blended in, and the resulting mixture is melt-kneaded; and a method in which part of the raw materials are blended in, and then melt-kneaded using a single-screw or twin-screw extruder, during which the remaining raw materials are mixed in using a side feeder. In addition, it is obviously possible that the components to be added in a small amount are added before molding, and then serve for molding, after the other components are kneaded and pelletized by the above-mentioned method or the like.

A PPS resin composition obtained in this manner can serve for various types of molding, such as injection molding, extrusion molding, blow molding, and transfer molding, and is particularly suitable for injection molding applications.

A PPS resin composition obtained in the present invention preferably has a tensile elongation of 2.5% or more in accordance with ISO527-1,-2 (2012) using a type A1 test piece prescribed in ISO20753. Having a tensile elongation of 2.5% or more allows the resulting product to have excellent impact strength, heat cycle resistance, and intermateability, and thus can contribute to preventing the product from cracking when fabricated or used. The tensile elongation of 2.5% or more can be achieved by blending in a copolymer such as an olefinic copolymer in an amount equal to or larger than a given amount. In this case, it is preferable to avoid blending in too much in order to prevent the amount of gas generation from becoming large.

Also in a case in which a type A1 test piece based on ISO20753 is treated at 225°C for 20 hours in accordance with IEC60216-4-1, the test piece preferably has a tensile elongation of 2.5% or more in accordance with ISO527-1,-2 (2012). Allowing the product to have a tensile elongation of 2.5% or more even when exposed to a high temperature enables the product to have excellent impact strength even when used for a long period of time in a high-temperature environment, and can contribute to preventing the product from cracking that can occur during usage.

On a PPS resin composition obtained in the present invention, the maximum voltage at which tracking breakdown does not occur is preferably 175 V or more in a tracking resistance test in accordance with IEC60112 (2003). Allowing the composition to withstand a higher voltage enables the creeping distance to be shortened, and can contribute to making the final product smaller. The tracking resistance performance of 175 V or more can be achieved by blending in a large amount of the inorganic filler, but this method has the drawback of impairing the mechanical strength and toughness. The present invention is a resin composition including 100 parts by weight of the PPS resin, 16 to 50 parts by weight of (B) the polyamide resin as defined in claim 1, 10 to 25 parts by weight of (C) the epoxy group-containing olefinic copolymer, 10 to 25 parts by weight of (D) the olefinic copolymer having no polar functional group, and furthermore, 40 to 140 parts by weight of (E) the fibrous filler, and is enabled to achieve both tracking resistance and toughness at a high level by adopting a formation in which (B) the polyamide resin, (C) the epoxy group-containing olefinic copolymer, and (D) the olefinic copolymer having no polar functional group are dispersed, having a number average dispersed particle size of 500 nm or less.

### Examples

Below, the present invention will be described more specifically with reference to Examples, and the present invention should not be limited to the description of these Examples.

### [Method of Evaluating PPS Resin Produced]

### (1) Melt Flow Rate (MFR)

A measurement was made at a measurement temperature of 315.5°C under a load of 5,000 g by a method in accordance with ASTM-D1238-70.

### [Reference Example] Preparation of PPS

Into a 70-liter autoclave with an agitator and a bottom stop valve, 8.27 kg (70.00 mol) of 47.5% sodium hydrosulfide, 2.91 kg (69.80 mol) of 96% sodium hydroxide, 11.45 kg (115.50 mol) of N-methyl-2-pyrrolidone (NMP), 1.89 kg (23.10 mol) of sodium acetate, and 10.5 kg of ion-exchanged water were fed. The resulting mixture was gradually heated to 245°C under a flow of nitrogen at ordinary pressure over a period of approximately 3 hours to distill off 14.78 kg of water and 0.28 kg of NMP. Then, the reactor container was cooled to 200°C. The amount of water remaining in the system, per 1 mol of the alkali metal sulfide fed, was 1.06 mol, including the water consumed for hydrolysis of NMP. In addition, the amount of the hydrogen sulfide scattered was 0.02 mol per 1 mol of the alkali metal sulfide fed.

Then, the mixture was cooled to 200°C. To the mixture, 10.45 kg (71.07 mol) ofp-dichlorobenzene and 9.37 kg (94.50 mol) of NMP were added, and the reactor container was sealed with nitrogen gas. The mixture was heated from 200°C to 270°C at a rate of 0.6°C/minute with stirring at 240 rpm. After the mixture was allowed to react at 270°C for 100 minutes, the bottom stop valve of the autoclave was opened, and the contents were flushed with pressurized nitrogen into a container with an agitator over a period of 15 minutes, and stirred at 250°C for a while to remove most of the NMP.

The solid substance obtained and 76 liters of ion-exchanged water were added to an autoclave with an agitator, washed at 70°C for 30 minutes, and then underwent suction filtration through a glass filter. Then, 76 liters of ion-exchanged water heated to 70°C was poured into the glass filter, and suction filtration was performed to afford a cake.

The cake obtained and 90 liters of ion-exchanged water were fed into an autoclave with an agitator, and acetic acid was added in such a manner that the pH became 7. The inside of the autoclave was purged with nitrogen, then heated to 192°C, and held for 30 minutes. Then, the autoclave was cooled, and the contents were taken out.

The contents underwent suction filtration through a glass filter, and then, 76 liters of ion-exchanged water at 70°C was poured into the glass filter. Suction filtration was performed to afford a cake. The cake obtained was dried at 120°C under a nitrogen gas stream to obtain a dried PPS.

The PPS obtained had an MFR of 600 g/10 minutes.

The PPS obtained by the above-mentioned method was thermally oxidized at an oxygen concentration of 2% at 220°C for 12 hours to obtain a PPS having an MFR of 400 g/10 minutes.

(A) PPS resin
   A-1: PPS obtained by Method Described in Reference Example
(B) thermoplastic resin having a tracking resistance of 125 V or more based on the IEC60112 standard, and having a glass-transition temperature of 0°C or more
   B-1: polyamide 610, CM2021 (manufactured by Toray Industries, Inc.)
   The CM2021 had a tracking resistance of 600 V or more based on the IEC60112 standard, and had a glass-transition temperature of 50°C.

(C) epoxy group-containing olefinic copolymer
   C-1: an ethylene/glycidyl methacrylate/methyl acrylate copolymer, BONDFAST BF-E (manufactured by Sumitomo Chemical Company, Limited)
   (C') olefinic copolymer having a polar functional group, and not corresponding to (C) the component
   C'-2: a hydrogenated product of an amino group-modified styrene/ethylene/butadiene copolymer, Tuftec MP10 (manufactured by Asahi Kasei Corporation)
(D) olefinic copolymer having no polar functional group
   D-1: a hydrogenated product of a styrene/ethylene/butadiene copolymer, Tuftec H1062 (manufactured by Asahi Kasei Corporation)
   D-2: an ethylene/1-butene copolymer, TAFMER 4085 (manufactured by Mitsui Chemicals, Inc.)
(E) fibrous filler
   E-1: chopped strands, T-760H (manufactured by Nippon Electric Glass Co., Ltd.)
(F) non-fibrous filler
   F-1: heavy calcium carbonate, ESCALON #800 (manufactured by Sankyo Seifun Co., Ltd)
   F-2: surface-treated magnesium hydroxide, KISUMA 5P (manufactured by Konoshima Chemical Co., Ltd.)

### [Method of Measurement Evaluation]

The methods of measurement and evaluation in the present Examples and Comparative Examples are as follows.

### (Measurement of Tensile Strength and Tensile Elongation)

A measurement was made in accordance with ISO527-1,-2 (2012).

Specifically, a measurement was made as follows. Resin composition pellets were supplied to an injection molding machine SE50DUZ-C160 (manufactured by Sumitomo Heavy Industries, Ltd.) set at a cylinder temperature of 310°C and at a molding tool temperature of 145°C, filled in a filling time of 0.8 second, and injection-molded at a holding pressure corresponding to 75% of the filling pressure to obtain a type A1 test piece prescribed in ISO20753. This test piece was conditioned at 23°C and at a relative humidity of 50% for 16 hours, and then, a measurement was made under conditions such as a grip-to-grip distance of 114 mm and a testing rate of 5 mm/second in an atmosphere at 23°C and a relative humidity of 50%.

### (Measurement of Tensile Elongation after Dry Heat Treatment)

A type A1 test piece prescribed in ISO20753 was obtained by the same method as the method described for the above-mentioned measurement of tensile strength and tensile elongation. This test piece was treated at 225°C for 20 hours in accordance with IEC60216-4-1, and then conditioned at 23°C and at a relative humidity of 50% for 16 hours, and then, a measurement of tensile elongation was made under the conditions such as a grip-to-grip distance of 114 mm and a testing rate of 5 mm/second in an atmosphere at 23°C and a relative humidity of 50% in accordance with ISO527-1,-2(2012).

### (Measurement of Tracking Resistance)

Resin composition pellets were supplied to an injection molding machine SE50DUZ-C160 set at a cylinder temperature of 320°C and at a molding tool temperature of 130°C, and molded under conditions such as an injection rate of 100 mm/second, an injection time of 10 seconds, and a cooling time of 15 seconds to obtain a rectangular plate (80 mm × 80 mm × 3.0 mmt). This rectangular plate as a test piece was used to determine, in accordance with IEC60112 (2003), the maximum voltage that did not cause tracking breakdown. An electrolytic solution used was a 0.1% ammonium chloride aqueous solution.

### (Measurement of Number Average Dispersed Particle Size)

A type A1 test piece prescribed in ISO20753 was molded at a molding temperature equal to the melting peak temperature of the PPS resin plus 20 to 40°C. A thin piece, 0.1 µm or less, was cut out of the central portion of the test piece in the cross-sectional area direction of the dumbbell piece at -20°C, and 100 island phases freely selected in the piece cut out were observed at a magnification of 1,000 times under a model H-7100 transmission electron microscope manufactured by Hitachi, Ltd. The maximum diameter and minimum diameter of each island phase were first measured to determine a biaxial average particle size, and then, the average of the values of the 100 pieces was determined as the number average dispersed particle size.

### [Examples 1 to 4 and Comparative Examples 1 to 8]

A twin-screw extruder TEX-44αIII (manufactured by The Japan Steel Works, Ltd.) with an intermediate addition inlet having a diameter of 44 mm was set at a cylinder temperature of 320°C and a screw rotating speed of 180 rpm. Using the extruder, 100 parts by weight of (A) a PPS resin, (B) a single thermoplastic resin having a tracking resistance of 125 V or more based on the IEC60112 standard, and having a glass-transition temperature of 0°C or more, (C) an epoxy group-containing olefinic copolymer, (D) an olefinic copolymer having no polar functional group, and (F) a non-fibrous filler were added through the raw material supply port at the weight ratios mentioned in Table 1, and the resulting mixture was made molten. (E) a fibrous filler was supplied through the intermediate addition inlet at the weight ratio mentioned in Table 1, and the resulting mixture was melt-kneaded at a discharge rate of 60 kg/hour to obtain pellets of a polyphenylene sulfide resin composition. The results of the evaluation made using the polyphenylene sulfide resin composition obtained are tabulated in Table 1.

**[Table 1]**

| Composition | | Units | Example 1 | Example 2 | Example 3 | Example 4 | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|---|---|---|---|
| (A) | A-1 | Parts by Weight | 100 | 100 | 100 | 100 | 100 | 100 | 100 | 100 | 100 | 100 | 100 | 100 |
| (B) | B-1 | | 23 | 38 | 23 | 34 | 32 | 23 | 23 | 23 | 23 | 39 | 40 | 23 |
| (C) or (C') | C-1 | | 11 | 13 | 11 | 14 | - | - | 6 | - | 20 | 16 | 17 | 20 |
| | C'-2 | | - | - | - | - | 39 | 11 | - | - | - | - | - | - |
| (D) | D-1 | | 11 | 13 | - | - | - | 11 | - | - | - | - | - | - |
| | D-2 | | - | - | 11 | 14 | - | - | 16 | 22 | 2 | 35 | 17 | 4 |
| (E) | E-1 | | 75 | 85 | 75 | 114 | 70 | 75 | 75 | 75 | 75 | 132 | 150 | 75 |
| Other Compnents | F-1 | | 1 | 1 | 1 | 1 | - | 1 | 1 | 1 | 1 | 1 | 1 | 1 |
| | F-2 | | - | - | - | - | 105 | - | - | - | - | - | - | - |
| (C) / (D) | | | 1.0 | 1.0 | 10 | 1.0 | - | - | 0.4 | 0 | 10 | 0.5 | 10 | 5 |
| (B) / ((C)+(D)) | | | 1.1 | 1.5 | 1.1 | 1.2 | 0.8 | 1.1 | 1.1 | 1.1 | 1.1 | 0.8 | 1.2 | 1.1 |
| Tensile Strength | | MPa | 155 | 158 | 144 | 150 | 78 | 154 | 150 | 148 | 140 | 138 | 144 | 145 |
| Tensile Elongation | | % | 2.8 | 2.6 | 3.2 | 2.6 | 2.0 | 2.3 | 2.4 | 2.4 | 2.4 | 2.2 | 2.3 | 2.4 |
| Tensile Elongation after Dry Heat Treatment ^{Note2)} | | % | 2.5 | 2.5 | 2.8 | 2.5 | 1.4 | 2.0 | 2.1 | 2.0 | 2.1 | 2.0 | 2.2 | 2.1 |
| Tracking Resistance | | V | 175 | 175 | 175 | 200 | 600 | 175 | 150 | 150 | 175 | 175 | 200 | 175 |
| Number Average Dispersed Particle Size of (B), (C) and (D) | | nm | 350 | 400 | 350 | 375 | 800 | 700 | 800 | 1,200 | 1,500 | 600 | 400 | 1,200 |

| | | | | | | | | | | | | | | |
|---|---|---|---|---|---|---|---|---|---|---|---|---|---|---|
| Note 1) A-1: PPS obtained by the method disclosed in the Reference Example, B-1: CM2021, C-1: BONDFAST BF-E, C'-2: TUFTEC MP10, D-1: TUFTEC H1062, D-2: TAFMER 4085, E-1: T-760H, F-1: ESCALON #800, F-2: KISUMA 5P Note 2) Dry Heat Treatment Condition: 22 | | | | | | | | | | | | | | |

From Examples 1 to 4 described in Table 1, it is understood that adding the polyamide resin, the epoxy group-containing olefinic copolymer, the olefinic copolymer having no polar functional group, and the fibrous filler contributed to achieving a tensile elongation of 2.5% or more and a tracking resistance of 175 V.

From Examples 1 and 2 described in Table 1, it is understood that excellent tensile elongation characteristics were exhibited even though the total amount of the polyamide resin and the copolymer was increased.

From Examples 1 and 3 described in Table 1, it is understood that excellent tensile elongation characteristics were exhibited even though the olefinic copolymer having no polar functional group was changed from the hydrogenated product of a styrene/ethylene/butadiene copolymer to the ethylene/1-butene copolymer.

From Examples 1 and 4 described in Table 1, it is understood that excellent tensile elongation characteristics were exhibited even though the blending amount of the fibrous filler was increased.

It is understood that Comparative Example 1 described in Table 1 included neither the epoxy group-containing olefinic copolymer nor the olefinic copolymer having no polar functional group, and did not satisfy 500 nm or less as the number average dispersed particle size of (B), (C), and (D) the components, thus resulting in exhibiting poor tensile strength and tensile elongation.

It is understood that Comparative Example 2 described in Table 1 did not include the epoxy group-containing olefinic copolymer, and did not satisfy 500 nm or less as the number average dispersed particle size of (B), (C), and (D) the components, thus resulting in exhibiting poor tensile elongation.

It is understood that Comparative Examples 3 and 4 described in Table 1 did not satisfy 10 to 25 parts by weight as the blending amount of (C) the epoxy group-containing olefinic copolymer, and did not satisfy 500 nm or less as the number average dispersed particle size of (B), (C), and (D) the components, thus resulting in exhibiting poor tensile elongation and tracking resistance.

It is understood that Comparative Example 5 described in Table 1 did not satisfy 10 to 25 parts by weight as the blending amount of (D) the olefinic copolymer having no polar functional group, and did not satisfy 500 nm or less as the number average dispersed particle size of (B), (C), and (D) the components, thus resulting in exhibiting poor tensile elongation.

It is understood that Comparative Example 6 described in Table 1 did not satisfy 10 to 25 parts by weight as the blending amount of (D) the olefinic copolymer having no polar functional group, and did not satisfy 500 nm or less as the number average dispersed particle size of (B), (C), and (D) the components, thus resulting in exhibiting poor tensile elongation.

From Comparative Example 7 described in Table 1, it is understood that the blending amount of (E) the fibrous filler was more than 140 parts, thus resulting in exhibiting poor tensile elongation.

It is understood that also Comparative Example 8 described in Table 1 did not satisfy 10 to 25 parts by weight as the blending amount of (D) the olefinic copolymer having no polar functional group, and did not satisfy 500 nm or less as the number average dispersed particle size of (B), (C), and (D) the components, thus resulting in exhibiting poor tensile elongation.

### Industrial Applicability

A molded product composed of a PPS resin composition according to the present invention has excellent mechanical strength, tracking resistance, and toughness, and thus, can be used to mold a composite with a metal.

Besides, examples of applications for which a molded product composed of a PPS resin composition according to the present invention can be used include: electric and electronic components typified by sensors, LED lamps, connectors for general use and on-vehicle use, sockets, resistors, relay cases, switches, coil bobbins, capacitors, variable capacitor cases, oscillators, various terminal boards, transformers, plugs, printed boards, tuners, speakers, microphones, headphones, small motors, magnetic head bases, semiconductors, liquid crystals, motor brush holders, parabolic antennas, computer-related parts, and the like; television parts; irons; hair dryers; rice cooker parts; microwave oven parts; audio equipment parts, such as audio parts, audio or laser discs (registered trademark), and compact discs; and household and business appliance parts typified by lighting parts, refrigerator parts, air-conditioner parts, typewriter parts, word processor parts, and the like. Other examples of various applications include: machine-related parts typified by office computer-related parts, telephone-related parts, facsimile-related parts, copier-related parts, jigs for washing, motor parts, lighters, typewriters, and the like; optical equipment-related and precision machine-related parts typified by microscopes, binoculars, cameras, watches, and the like; automobile-related and vehicle-related parts such as valve alternator terminals, alternator connectors, IC regulators, potentiometer bases for light dimmers, various valves such as exhaust gas valves, various fuel-related, exhaust system-related, and suction system-related pipes, air intake nozzle snorkels, intake manifolds, fuel pumps, engine cooling water joints, carburetor main bodies, carburetor spacers, turboducts, EGR valves, waste gate actuators, suction ports, power turbo chargers, exhaust gas sensors, cooling water sensors, oil temperature sensors, throttle position sensors, crankshaft position sensors, airflow meters, brake pad wear sensors, thermomanagement modules, thermostats, control valves, seal rings, oil pumps, oil jackets, fuel pump housings, brush holders for radiator motors, cooling piping, valve cases for cooling, water pump impellers, inlets, outlets, turbine vanes, insulators, resolvers, kafsa spacers, in-wheel motor bobbins, wiper motor-related parts, distributors, starter switches, starter relays, wire harnesses for transmission, window washer nozzles, air-conditioner panel switch boards, coils for fuel-related electromagnetic valves, connectors for fuses, horn terminals, lithium-ion battery (LIB) packs, LIB housings, LIB modules, battery disconnect units, gaskets, wireless power-supply housings, covers, electrical and electronic part-insulating plates, inverter cases, reactors, terminal blocks, electric current sensors, DC-DC converters, inverter trays, bus bar modules, step motor rotors, lamp sockets, lamp reflectors, lamp housings, sensing camera lens tubes, head-up displays, radomes, millimeter-wave radar waveguides, brake pistons, engine mount orifices, trans-axle gears, magnetic resistance element (MRE) sensors, variable valve timing mechanism (VCT) flat solenoids, compressors, power steering covers, differential gears, valve timing control (VTC) covers, shift position sensors, bearing retainers, vacuum pump vanes, connection rings, air pumps, transmission covers, rear torsion beams, solenoid bobbins, engine oil filters, ignition coils, ignitor cases, alternator brush holders, alternator circuit boards, alternator slip rings, stator housings, motor generator speed sensors, engine control computer (ECU) cases, mechanically and electrically integrated modules, intelligent power unit (IPU) supports, harness protectors, shift-by-wires, pressure sensors, harness protectors, transformer coils, gas-liquid separators, stack manifolds, neck mounts, FC piping, and cable liners; and the like.

## Claims

1. A polyphenylene sulfide resin composition, comprising 100 parts by weight of (A) a polyphenylene sulfide resin, 16 to 50 parts by weights of (B) a polyamide resin, 10 to 25 parts by weight of (C) an epoxy group-containing olefinic copolymer, 10 to 25 parts by weight of (D) an olefinic copolymer having no polar functional group, and furthermore 40 to 140 parts by weight of (E) a fibrous filler, wherein (B) the polyamide resin, (C) the epoxy group-containing olefinic copolymer, and (D) the olefinic copolymer having no polar functional group are dispersed, having a number average dispersed particle size, as measured by the method of the description, of 500 nm or less,
wherein (B) the polyamide resin has a repeating unit represented by the following structural formula: 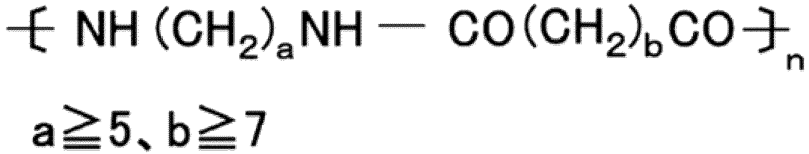
wherein a is a natural number of 5 or more, and represents the number of repeating units that are methylene groups, and b is a natural number of 7 or more, and represents the number of repeating units that are methylene groups, or
wherein (B) the polyamide resin is one or more selected from nylon 6, nylon 66, nylon 46, nylon 610, nylon 612, nylon 11, nylon 12, and aromatic nylon.

2. The polyphenylene sulfide resin composition according to claim 1, wherein the ratio (C)/(D) of the blending amount of (C) the epoxy group-containing olefinic copolymer to the blending amount of (D) the olefinic copolymer having no polar functional group is in the range of from 0.6 to 2.

3. The polyphenylene sulfide resin composition according to claim 1 or 2, wherein (B) the polyamide resin is one or more selected from nylon 6, nylon 610, nylon 612, nylon 11, and nylon 12.

4. The polyphenylene sulfide resin composition according to any one of claims 1 to 3, wherein the ratio (B)/((C) + (D)) of the blending amount of (B) the polyamide resin to the total blending amount of (C) the epoxy group-containing olefinic copolymer and (D) the olefinic copolymer having no polar functional group, with respect to 100 parts by weight of (A) the polyphenylene sulfide resin, is 1.1 to 2.

5. A molded product composed of the polyphenylene sulfide resin composition according to any one of claims 1 to 4.

6. The molded product according to claim 5, wherein the molded product is a composite with a metal.

## Patentansprüche

1. Polyethylensulfidharz-Zusammensetzung, die 100 Gewichtsteile (A) eines Polyphenylensulfidharzes, 16 bis 50 Gewichtsteile (B) eines Polyamidharzes, 10 bis 25 Gewichtsteile (C) eines Epoxygruppen-hältigen olefinischen Copolymers, 10 bis 25 Gewichtsteile (D) eines olefinischen Copolymers ohne polare funktionelle Gruppen und außerdem 40 bis 140 Gewichtsteile (E) eines faserförmigen Füllstoffs umfasst, wobei (B) das Polyamidharz, (C) das Epoxygruppen-hältige olefinische Copolymer und (D) das olefinische Copolymer ohne polare funktionelle Gruppen dispergiert sind, die eine durch das Verfahren gemäß der Beschreibung gemessene zahlenmittlere Teilchengröße der dispergierten Teilchen von 500 nm oder weniger aufweist,
wobei (B) das Polyamidharz eine Grundeinheit aufweist, die durch die folgende Strukturformel dargestellt ist: 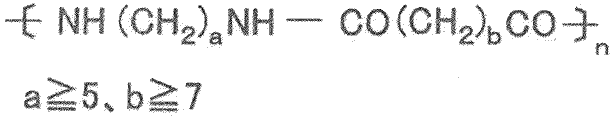
worin a eine natürliche Zahl von 5 oder mehr ist und die Anzahl an Grundeinheiten darstellt, die Methylengruppen sind, und b eine natürliche Zahl von 7 oder mehr ist und die Anzahl an Grundeinheiten darstellt, die Methylengruppen sind, oder
wobei (B) das Polyamidharz eines oder mehrere, ausgewählt aus Nylon 6, Nylon 66, Nylon 46, Nylon 610, Nylon 612, Nylon 11, Nylon 12 und aromatischem Nylon sind.

2. Polyethylensulfidharz-Zusammensetzung nach Anspruch 1, wobei das Verhältnis (C)/(D) zwischen der Mischmenge von (C) dem Epoxygruppen-hältigen olefinischen Copolymer und der Mischmenge von (D) dem olefinischen Copolymer ohne polare funktionelle Gruppen im Bereich von 0,6 bis 2 liegt.

3. Polyethylensulfidharz-Zusammensetzung nach Anspruch 1 oder 2, wobei (B) das Polyamidharz eines oder mehrere, ausgewählt aus Nylon 6, Nylon 610, Nylon 612, Nylon 11 und Nylon 12 sind.

4. Polyethylensulfidharz-Zusammensetzung nach einem der Ansprüche 1 bis 3, wobei das Verhältnis (B)/((C)+(D) zwischen der Mischmenge von (B) dem Polyamidharz und der Mischmenge von (C) dem Epoxygruppen-hältigen olefinischen Copolymer und der Mischmenge von (D) dem olefinischen Copolymer ohne polare funktionelle Gruppen, bezogen auf 100 Gewichtsteile von (A) dem Polyphenylensulfidharz, im Bereich von 1,1 bis 2 liegt.

5. Geformtes Produkt, das aus einer Polyethylensulfidharz-Zusammensetzung nach einem der Ansprüche 1 bis 4 besteht.

6. Geformtes Produkt nach Anspruch 5, wobei das geformte Produkt ein Verbundwerkstoff mit einem Metall ist.

## Revendications

1. Composition de résine de sulfure de polyphénylène, comprenant 100 parties en poids de (A) une résine de sulfure de polyphénylène, de 16 à 50 parties en poids de (B), une résine de polyamide, de 10 à 25 parties en poids de (C), un copolymère oléfinique contenant un groupe époxy, de 10 à 25 parties en poids de (D), un copolymère oléfinique ne présentant pas de groupe fonctionnel polaire, et de plus de 40 à 140 parties en poids de (E), une charge fibreuse, dans laquelle (B), la résine de polyamide, (C), le copolymère oléfinique contenant un groupe époxy, et (D), le copolymère oléfinique ne présentant pas de groupe fonctionnel polaire, sont dispersés, présentant une taille de particule dispersée moyenne en nombre, telle que mesurée par le procédé de la description, de 500 nm ou moins,
dans laquelle (B) la résine de polyamide présente une unité répétitive représentée par la formule structurelle suivante : 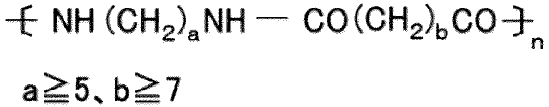
dans laquelle a est un nombre entier naturel de 5 ou plus, et représente le nombre d'unités répétitives qui sont des groupes méthylène, et b est un nombre entier naturel de 7 ou plus, et représente le nombre d'unités répétitives qui sont des groupes méthylène, ou
dans laquelle (B) la résine de polyamide est une ou plusieurs choisies parmi le nylon 6, le nylon 66, le nylon 46, le nylon 610, le nylon 612, le nylon 11, le nylon 12 et le nylon aromatique.

2. Composition de résine de sulfure de polyphénylène selon la revendication 1, dans laquelle le rapport (C)/(D) de la quantité de mélange de (C), le copolymère oléfinique contenant un groupe époxy à la quantité de mélange de (D), le copolymère oléfinique ne présentant pas de groupe fonctionnel polaire, est dans la plage de 0,6 à 2.

3. Composition de résine de sulfure de polyphénylène selon la revendication 1 ou 2, dans laquelle (B), la résine de polyamide, est une ou plusieurs choisies parmi le nylon 6, le nylon 610, le nylon 612, le nylon 11 et le nylon 12.

4. Composition de résine de sulfure de polyphénylène selon l'une quelconque des revendications 1 à 3, dans laquelle le rapport (B)/((C) + (D)) de la quantité de mélange de (B), la résine de polyamide, à la quantité de mélange totale de (C), le copolymère oléfinique contenant un groupe époxy, et (D), le copolymère oléfinique ne présentant pas de groupe fonctionnel polaire, par rapport à 100 parties en poids de (A), la résine de sulfure de polyphénylène, est de 1,1 à 2.

5. Produit moulé composé de ladite composition de résine de sulfure de polyphénylène selon l'une quelconque des revendications 1 à 4.

6. Produit moulé selon la revendication 5, dans lequel le produit moulé est un composite avec un métal.
